# EUROPÄISCHE PATENTANMELDUNG

(11) **EP 4 397 724 A1**
(43) Veröffentlichungstag der Anmeldung: **10.07.2024**
(21) Anmeldenummer: 23210169.1
(22) Anmeldetag: 15.11.2023
(51) Int. Cl.: C09C 1/42, D21H 17/68

(54) **ÜBERSTRUKTUREN MITEINANDER VERBUNDENER PRIMÄRPARTIKEL, VERFAHREN ZU DESSEN HERSTELLUNG UND DEREN VERWENDUNG**

(30) Priorität: 28.11.2022 DE 102022131383
(71) Anmelder: Gebrüder Dorfner GmbH & Co. Kaolin- und Kristallquarzsand-Werke KG, 92242 Hirschau (DE)
(72) Erfinder: Kräuter, Reinhard, 92237 Sulzbach-Rosenberg (DE)
(74) Vertreter: Hannke, Christian

(57) **Zusammenfassung**

Überstrukturen und Verfahren zur Herstellung von Überstrukturen miteinander verbundener Primärpartikel, wobei die Primärpartikel ausgewählt sind aus einer Gruppe, die 2-Schichtsilikate, 3-Schichtsilikate und 4-Schichtsilikate umfasst und wobei die Überstrukturen zu mindestens 50 Gewichtsprozent eine Partikelgröße (Sedigraph) < 10 µm und zu mindestens 5 Gewichtsprozent eine Partikelgröße (Sedigraph) < 2 µm aufweisen, mit den Schritten Bereitstellen der Primärpartikel, welche zu mindestens 50 Gewichtsprozent eine Partikelgröße (Sedigraph) < 10 µm und zu mindestens 20 Gewichtsprozent eine Partikelgröße (Sedigraph) < 2 µm aufweisen, und thermische Behandlung der Primärpartikel in einem Temperaturbereich von 200°C bis 900°C.

## Beschreibung

Die vorliegende Erfindung betrifft ein Verfahren zur Herstellung von Überstrukturen miteinander verbundener Primärpartikel eines oder mehrerer Schichtsilikate. Weiterhin betrifft die Erfindung derartige Überstrukturen miteinander verbundener Primärpartikel eines oder mehrerer Schichtsilikate sowie deren Anwendung.

Im Folgenden werden die erfindungsgemäßen Überstrukturen miteinander verbundener Primärpartikel eines oder mehrerer Schichtsilikate, deren Verwendung und das Verfahren zu deren Herstellung oftmals an Kaolin beschrieben und die Überstrukturen auch als "strukturierter Kaolin" bezeichnet. Dennoch sollen auch die am Beispiel von Kaolin und dem strukturierten Kaolin beschriebenen Offenbarungen allgemein für Überstrukturen miteinander verbundener Primärpartikel eines oder mehrerer Schichtsilikate als offenbart gelten. Wie im Folgenden dargelegt wird, wird als "strukturierter Kaolin" ein Kaolin verstanden, bei welchem einzelne feinste Kaolineinzelpartikel (vorzugsweise irreversibel) miteinander zu (feinen) Aggregaten verbunden sind, welche insbesondere bei Suspendierung in Wasser nicht wieder zu den Kaolineinzelpartikeln zerfallen. Analog gilt dies auch für die erfindungsgemäßen Überstrukturen miteinander verbundener Primärpartikel eines oder mehrerer Schichtsilikate, deren Verwendung und das Verfahren zu deren Herstellung.

Ein gängiges Verfahren einen strukturierten Kaolin in diesem Sinn herzustellen ist beispielsweise, die thermische Behandlung (Kalzinierung) von Kaolinpulver bei hohen Temperaturen, zur Herstellung eines sogenannten kalzinierten Kaolins.

In diesem Sinn werden hier auch die entsprechenden Eigenschaften eines strukturierten Kaolins beschrieben, wie sie beispielsweise durch die Kalzinierung von Kaolin bei Temperaturen, die nach dem Stand der Technik in der Regel im Bereich von 950°C bis 1250°C liegen. Es kommt hierbei durch die bei der Temperaturbehandlung hervorgerufene irreversible Verbindung feinster einzelner Kaolinpartikel zu feinen Aggregaten zu einer Strukturierung. Dadurch erfolgt auch eine Eigenschaftsänderung des Kaolins, die sich z.B. durch eine stärkere Lichtstreuung und so zu einer verbesserten Deckkraft, insbesondere bei Verwendung als funktioneller Füllstoff in Papier-, Polymer- oder Farbanwendungen auswirkt.

Ein weiterer Effekt der Strukturierung ist beispielsweise eine verbesserte thermoisolierende Wirkung, z.B. bei Verwendung als Strichbestandteil in Thermopapier. Ebenfalls werden bei der Kalzinierung die rheologischen Eigenschaften beispielsweise für Farbanwendungen verbessert.

Eine wie oben beschriebene Strukturierung lässt sich mit verschiedenen Methoden prüfen, z.B. mittels REM oder mittels Prüfung der optischen Eigenschaften, z.B. der Lichtstreuung. Eine sehr einfache Methode stellt weiterhin die Messung der Korngrößenveränderung durch Vergleich der Korngrößen vor und nach dem Strukturierungsprozess dar. Eine Strukturierung eines Kaolins in diesem Sinn ist dann aufgetreten, wenn sich die Korngröße, gemessen z.B. mittels Sedigraph in flüssigem, z.B. wässrigem Milieu - nach einer entsprechenden Behandlung - im Vergleich zum Ausgangskaolinpulver vergröbert hat. Dies ist in späteren Beispielen gezeigt.

In US 2 307 239 wird die Herstellung von thermisch behandeltem Kaolin beschrieben, wobei als Ausgangskaolin ein Kaolin mit einem GE-Weißgrad von 83,6 eingesetzt und bevorzugt nach vorheriger Zumischung von NaCl in einem Temperaturfenster von bevorzugt 785°C bis 965°C behandelt wird. Es wird darauf hingewiesen, dass die gewünschten Eigenschaften nicht erhalten werden, wenn Kaolin bei Temperaturen von 400°C bis 500°C behandelt wird. Zumischungen zu dem Kaolin führen weiterhin zu verstärkten Korrosionseffekten.

US 3 014 836 beschreibt kalziniertes Kaolin das sich durch eine niedrige Abrasion auszeichnet. Es wird hergestellt, indem sehr feines Ausgangskaolin bzw. das entsprechende kalzinierte Kaolin vor bzw. nach der thermischen Behandlung (980°C bis 1038°C) pulverisiert wird und dabei die abrasionsverursachenden groben Agglomerate sowohl auf der Aufgabe- als auch auf der Produktseite weitestgehend eliminiert werden.

In US 3 383 438 wird weiterhin die Herstellung eines kalzinierten Kaolins mit niedriger Abrasion und seine Anwendungen beschrieben. Ein Beispiel ist eine thermische Behandlung mit einem indirekt beheizten Drehrohr in einem Temperaturbereich von 980° bis 1150°C.

US 3 586 523 wiederum beschreibt die Herstellung und die Verwendung von kalziniertem Kaolin als funktionellem Füllstoff in Zeitungspapier, wobei hierfür ein spezieller Ausgangskaolin verwendet wird, bezeichnet als "hard sedimentary kaolin clay". Der d₅₀-Wert von 0,3 µm (bezogen auf den Partikeldurchmesser) des Aufgabekaolins nimmt auf 0,8 µm im kalzinierten, also strukturierten Kaolin zu.

In allen Fällen wird kalziniertes Kaolin erhalten, das z.B. aufgrund der Strukturierung, der daraus resultierenden Lichtstreuung und Deckkraft sowie des Weißgrades als funktioneller Füllstoff z.B. in Papier, Polymeren oder Farben zum Einsatz kommen kann.

Auf Basis dieser Patentanmeldungen wurden dann in der Folgezeit weitere Modifizierungen und Optimierungen der Prozesse und Verfahren bzw. der Produkte durchgeführt. Allen gemeinsam ist, dass die Herstellung entsprechender Produkte wie oben beschrieben immer bei Temperaturen >785 °C, in der Praxis aber vorwiegend bei >950°C erfolgt. Dies hat mehrere ökologische, ökonomische und verfahrenstechnische Nachteile: Die Verfahren sind sehr investitions- und wartungsintensiv, zum Teil auch stark korrodierend, sehr energieintensiv bei laufendem Betrieb und demzufolge teuer. Bei der Herstellung werden direkt oder indirekt auch große Mengen an CO₂ freigesetzt.

Aufgabe ist es daher, Überstrukturen miteinander verbundener Primärpartikel eines oder mehrerer Schichtsilikate zur Verfügung zu stellen, welche ähnliche Eigenschaften wie die bekannten kalzinierten Kaoline aufweisen, jedoch mit geringerem Energieaufwand und unter geringerer direkter oder indirekter COz-freisetzungherstellbar sind.

Diese Überstrukturen miteinander verbundener Primärpartikel eines oder mehrerer Schichtsilikate sollen mindestens eine Eigenschaft aufweisen, welche bei strukturierten Kaolinen, hergestellt nach dem klassischen Hochtemperaturprozess, gegeben sind.

Weiterhin ist es die Aufgabe Überstrukturen miteinander verbundener Primärpartikel eines oder mehrerer Schichtsilikatezur Verfügung zu stellen, welche anders als strukturierte Kaoline, die nach dem klassischen Hochtemperaturprozess hergestellt sind, eine korrosionshemmende Wirkung, eine flammschützende Wirkung und/oder eine Verbesserung einer mechanischen, chemischen, physikalischen und/oder technischer Eigenschaft aufweist.

Weiterhin ist es die Aufgabe, ein Verfahren bereitzustellen, mit welchem derartige Überstrukturen miteinander verbundener Primärpartikel eines oder mehrerer Schichtsilikate zur Verfügung gestellt werden können, insbesondere möglichst ohne Zusatz korrodierender Zusätze.

Weiterhin ist es die Aufgabe, vorteilhafte Anwendungen für derartige Überstrukturen miteinander verbundener Primärpartikel eines oder mehrerer Schichtsilikate aufzuzeigen.

Überraschender Weise und entgegen dem Wissen aus dem Stand der Technik hat sich gezeigt, dass diese Aufgaben durch ein Verfahren nach Anspruch 1, eine Überstruktur nach Anspruch 7 sowie eine Verwendung nach Anspruch 11 gelöst werden kann.

Das erfindungsgemäße Verfahren zur Herstellung von Überstrukturen miteinander verbundener Primärpartikel, bei dem die Primärpartikel ausgewählt sind aus einer Gruppe, die 2-Schichtsilikate, 3-Schichtsilikate und 4-Schichtsilikate umfasst und die Überstrukturen zu mindestens 50 Gewichtsprozent eine Partikelgröße (Sedigraph) < 10 µm und zu mindestens 5 Gewichtsprozent eine Partikelgröße (Sedigraph) < 2 µm aufweisen, zeichnet sich dadurch aus, dass
Primärpartikel bereitgestellt werden, welche zu mindestens 50 Gewichtsprozent eine Partikelgröße (Sedigraph) < 10 µm und zu mindestens 20 Gewichtsprozent eine Partikelgröße (Sedigraph) < 2 µm aufweisen, und die Primärpartikel in einem Temperaturbereich von 200°C bis 900°C thermisch behandelt werden.

Vorzugsweise erfolgt die thermische Behandlung der Primärpartikel in einem Temperaturbereich von 850°C oder weniger, bevorzugt 785°C oder weniger. Dadurch ist eine weitere Energieeinsparung und CO₂-reduzierung möglich.

Durch dieses Verfahren wird eine gewünschte Strukturierung erreicht und mindestens eine der vorgenannten Aufgabenstellungen gelöst. Dadurch, dass beispielsweise ein entsprechend ausgewähltes Ausgangskaolin bei (gegenüber dem Stand der Technik) deutlich reduzierter Temperatur thermisch behandelt wird, kann ein Produkt (nämlich die Überstrukturen) erhalten werden, welche die gewünschten Eigenschaften aufweisen. Dies kann vorzugsweise ohne Zumischungen anderer Substanzen erreicht werden, was das Verfahren besonders einfach macht. Ebenso kann im Vergleich zum Stand der Technik die Behandlungstemperatur deutlich reduziert werden, sodass eine Energieeinsparung und Verringerung der direkten und/oder indirekten CO₂-Emmision möglich ist. Außerdem ist eine indirekte Beheizung nicht zwingend notwendig und es werden trotzdem Überstrukturen mit einer sehr hohen Deckkraft und einer sehr niedrigen Abrasion sowie niedrigem Glanz erhalten.

Wie bereits eingangs erwähnt, steht Kaolin im Rahmen dieser Beschreibung stellvertretend für 2, 3, oder 4-Schichtsilikate, die ebenfalls einzeln oder in Kombination als Ausgangsmaterial für das oben beschriebene Verfahren genutzt werden können. Vorzugsweise sind die Primärpartikel ausgewählt aus einer Gruppe, die Kaolin, Montmorillonit, Talkum, Glimmer, Sepiolith, Nakrit, Halloysit, Dickit, und andere, Mischungen dieser untereinander oder mit anderen umfasst. Bevorzugt eingesetzt wird Kaolin, Halloysit, Dickit und/oder Nakrit. Weiterhin steht Kaolin hier für kaolinithaltige Mineralmischungen mit niedrigem Kaolinitgehalt, wie in der Tabelle 1 beschrieben.

Bevorzugte Kriterien zur Auswahl von Rohstoffen zur Herstellung der Überstrukturen miteinander verbundener Primärpartikel sind in Tabelle 1 gezeigt.

**Tabelle 1:**

| **Parameter** | **Einheit** | **Kaolin** | **Halloysit** | **Nakrit** | **Dickit** |
|---|---|---|---|---|---|
| Mineralanteil* | Ma-% | >15 | >40 | >40 | >40 |
| Mineralanteil bevorzugt | Ma-% | >50 | >50 | >50 | >50 |
| Mineralanteil meist bevorzugt | Ma-% | >60 | >60 | >60 | >60 |
| Korngröße 1, < 10 µm | Ma-% | >50 | >50 | >50 | >50 |
| Korngröße 1, < 10 µm, bevorzugt | Ma-% | >60 | >60 | >60 | >60 |
| Korngröße 1, < 10 µm, meist bevorzugt | Ma-% | >80 | >80 | >80 | >80 |
| Korngröße 1, < 2 µm | Ma-% | >20 | >20 | >20 | >20 |
| Korngröße 1, < 2 µm, bevorzugt | Ma-% | >40 | >40 | >40 | >40 |
| Korngröße 1, < 2 µm, meist bevorzugt | Ma-% | >60 | >60 | >60 | >60 |
| Korngröße 2, < 10 µm | Ma-% | >50 | >50 | >50 | >50 |
| Korngröße 2, < 10 µm bevorzugt | Ma-% | >60 | >60 | >60 | >60 |
| Korngröße 2, < 10 µm meist bevorzugt | Ma-% | >80 | >80 | >80 | >80 |
| Korngröße 2, < 2 µm | Ma-% | >20 | >20 | >20 | >20 |
| Korngröße 2, < 2 µm, bevorzugt | Ma-% | >40 | >40 | >40 | >40 |
| Korngröße 2, < 2 µm, meist bevorzugt | Ma-% | >60 | >60 | >60 | >60 |
| Aspektverhältnis meist bevorzugt | | >3 | >3 | >3 | >3 |
| Weißgrad, R 457 | % | >60 | >80 | >80 | >80 |
| Weißgrad, R 457 meist bevorzugt | % | >85 | >85 | >85 | >85 |
| Feuchtigkeit (100°C), meist bevorzugt | Ma-% | <50 | <50 | <50 | <50 |
| Chem. Inhalt (außer Al, Si, H, O) | Ma-% | <60 | <60 | <60 | <60 |
| Chem. Inhalt (außer Al, Si, H, O), bevorzugt | Ma-% | <10 | <10 | <10 | <10 |
| Morphologie, REM, vorwiegende Partikelform | | plättchenförmig | faserartig | plättchenförmig | plättchenförmig |

| | | | | | |
|---|---|---|---|---|---|
| Korngröße 1 = gemessen mittels Sedimentationsmethode, z.B. Sedigraph Korngröße 2 = gemessen mittels Laserbeugung, z.B. mittels Cilas *Mineralanteil jeweils bezogen auf die Hauptminerale Kaolin, Halloysit, Nakrit, Dickit | | | | | |

Der oder die Rohstoffe (oder Primärpartikel) zur Herstellung der Überstrukturen miteinander verbundener Primärpartikel werden vorzugsweise bereitgestellt, nachdem mindestens ein weiterer Verfahrensschritt durchgeführt wurde, welcher aus einer Gruppe ausgewählt ist, der Abbau der Roherde, Suspendierung von Roherde in Wasser, Abtrennung grober Anteile, Trennung der Feinstoffe gegebenenfalls in verschiedene Fraktionen, Nassmahlung, Trockenmahlung, chemische und/der physikalische Weißgradverbesserung, oxidierende und/oder reduzierende Bleiche, Magnetscheidung, Reinigung, selektive Flockung, Fraktionierung, Flockung, Eindickung, Delaminierung, Mahlung, Mischung mit anderen Komponenten, Zusatz mindestens eines Additivs, Zusatz mindestens eines organischen Aufhellers, Zusatz mindestens eines anorganischen Aufhellers, Zusatz mindestens eines anderen Kaolins, Zusatz mindestens eines Füllstoffen, Entwässerung, Dispergierung, Granulierung, Mahltrocknung und/oder Sprühtrocknung umfasst.

Als Ergänzung kann einem Rohstoff vor und/oder während dem Strukturierungsprozess bzw. der thermischen Behandlung der Primärpartikel mindestens ein Zusatz zugegeben werden, welcher ausgewählt ist aus einer Gruppe, die Silikate, Oxide, Carbonate, Sulfate, Phosphate, Calciumcarbonat, Quarz, Feldspat, Wollastonit, Apatit, Gips, Magnesit jeweils einzeln oder als Mischungen umfasst. Denkbar ist auch, dass einem strukturierten Produkt (einer Überstruktur) nach dem Prozess weitere anorganische oder organische Zusätze zugegeben werden, beispielsweise Silikate, Oxide, Carbonate, Sulfate, Phosphate, wie z.B. Calciumcarbonat, Quarz, Feldspat, Wollastonit, Apatit, Gips, Magnesit oder andere, jeweils einzeln oder als Mischungen.

Daneben können optional weitere anorganische oder organische Additive zugegeben werden, z.B. farbbeeinflussende, insbesondere aufhellende Zusätze.

Die Additive oder anderen Zusätze werden vorzugsweise als Pulver, Suspension, Lösung, Paste, Dampf, Gas jeweils einzeln oder als Mischungen miteinander oder nacheinander zugegeben.

Die Hochtemperaturbehandlung nach dem Stand der Technik geschieht in der Regel in Drehrohr- oder Etagenöfen bei Temperaturen von in der Regel >950°C - 1250°C. Diese Geräte werden direkt oder indirekt beheizt.

Im Sinne des hier beschriebenen Verfahrens können diese bekannten Verfahren weiterhin eingesetzt werden, jedoch bei deutlich reduzierter Temperatur, nämlich 200 - 900°C, bevorzugt 250 - 850°C, besonders bevorzugt 300 - 785°C. Daneben können alternativ oder zusätzlich andere Verfahren eingesetzt werden, wie z.B. Wirbelschichtverfahren, mahltrocknende oder sprühtrocknende Verfahren, die üblicherweise bei deutlich niedrigeren Temperaturen betrieben werden als die Kalzinierung nach dem Stand der Technik.

Vorzugsweise findet dementsprechend die thermische Behandlung der Primärpartikel in einem Ofen statt, welcher ausgewählt ist aus einer Gruppe, die einen Drehrohrofen, einen Etagenofen, einem Wirbelschichtofen, einem Mahltrockenofen und einen Sprühtrockenofen umfasst.

Darüber hinaus kann es auch besonders vorteilhaft sein, die thermische Behandlung in reduzierender oder oxidierender Atmosphäre durchzuführen. Dies kann vorzugsweise in Abhängigkeit der Eigenschaften der Primärpartikel und/oder den gewünschten Produkteigenschaften erfolgen.

Es ist auch möglich eine erste oder weitere Trocknung des Aufgabematerials (der Primärpartikel) bei Temperatur 1 (oder weitere) und eine zweite oder weitere Trocknung bei Temperatur 2 (oder weitere) durchzuführen. Daneben ist jegliche zeitliche und räumliche Trennung im Sinn dieser Verfahrensbeschreibung möglich.

Vorteilhaft ist auch, wenn das Aufgabematerial (der Primärpartikel) und/oder das Produkt (die Überstruktur) vor bzw. nach der thermischen Behandlung auf eine gewünschte (beispielsweise mittlere) Überstrukturgröße eingestellt, beispielsweise pulverisiert wird. Dies kann vorzugsweise mittels Stiftmühle, Rotormühle, Hammermühle, Strahlmühle oder einer vergleichbaren Mühle erfolgen. Vorzugsweise ist dieser Schritt auf der Aufgabeseite kombiniert mit einer gleichzeitigen Trocknung eines feuchten Aufgabematerials, z.B. einer Suspension von stückigem Filterkuchen oder granuliertem Kaolin mit dem Ziel, gegebenenfalls enthaltene Agglomerate zu zerkleinern. Vorzugsweise ist die mittlere Partikelgröße der enthaltenen Agglomerate <10 cm, bevorzugt <1 cm, weiter bevorzugt <1 mm, meist bevorzugt <100 µm, gemessen als trockenes Pulver z.B. mittels Trockensiebung oder mit einem Mikroskop.

Auf der Produktseite kann optional zusätzlich eine Nass- oder Trockenmahlung, ggf. kombiniert mit einer Klassierung, z.B. Zyklonierung oder Sichtung vorteilhaft sein.

In einer bevorzugten Ausgestaltung wird eine Oberflächenbeschichtung der Überstrukturen mit organischen und/oder anorganischen Additiven und/oder eine Vermischung mit anderen Füllstoffen oder Pigmenten vorgenommen.

Die Reihenfolge der oben beschriebenen einzelnen Verfahrensschritte kann sofern nicht anders definiert zeitlich oder räumlich getrennt oder in beliebiger Kombination miteinander, in jeder nicht explizit ausgeschlossenen Reihenfolge erfolgen. Dabei ist auch denkbar, dass einzelne Verfahrensschritte auch mehrmals hintereinander durchgeführt werden können oder im Bedarfsfall weggelassen oder mit einem oder mehreren anderen, oben nicht genannten Verfahrensschritt kombiniert werden.

Die Aufgabekorngrößen bzw. Produktkorngrößenbestimmung erfolgt vorzugsweise in flüssiger Suspension, bevorzugt in Wasser und mittels Sedigraph (Sedimentationsmethode). Dazu wird vorzugsweise jede hinsichtlich der Korngrößenverteilung zu messende Suspension 3 min. mit Ultraschall behandelt, um lockere Agglomerate zu zerstören, die nicht als strukturierte Kaolinagglomerate im Sinne dieser Beschreibung verstanden werden. Trockene Verfahren zur Produktkorngrößenbestimmung werden vorzugsweise nicht angewendet, da die tatsächliche Irreversibilität der Bildung der Überstrukturen im Sinne dieser Beschreibung damit nur unzureichend nachweisbar ist.

Wesentlich für die Beurteilung der Korngrößenvergröberung und damit für die Beurteilung einer erfolgten Strukturierung ist z.B. die Verschiebung des Kornbandes insgesamt, vereinfacht ausgedrückt in einer Zunahme des d₅₀-Wertes (bezogen auf den Partikeldurchmesser), bevorzugt ausgedrückt mit der Abnahme des Anteils < 2 µm.

Hierbei darf aber nicht außer Acht gelassen werden, dass vorzugsweise auch der Grobanteil durch einen Strukturierungsprozess nicht übermäßig zunehmen darf, also eine Bildung sehr grober Agglomerate unterbleiben muss. Hierzu kann eine feste Zielgröße nur bedingt angegeben werden, da diese letztlich entscheidend von der späteren Anwendung abhängig ist. Ohne das Vorgenannte einzuschränken, lässt sich hierfür als bevorzugte Größenordnung ein Bereich von maximal 1 Ma-% > 50 µm angeben.

Bevorzugt ist das Verfahren dafür vorgesehen, geeignet und/oder bestimmt, eine der im Folgenden beschriebenen Überstruktur sowie alle im Zusammenhang mit diesen Überstrukturen beschriebenen Merkmale einzeln oder in Kombination miteinander zu erzeugen. Das Verfahren kann mit allen im Rahmen der Überstrukturen beschriebenen Merkmalen einzeln oder in Kombination miteinander durchgeführt werden. Umgekehrt können auch mehrere oder einzelne Verfahrensschritte vorgesehen sein, die sich aus lediglich um Folgenden im Zusammenhang mit den Überstrukturen und den Beispielen beschriebenen Merkmalen ergeben oder in diesem Zusammenhang notwendig sind. Insbesondere ist vorgesehen, dass die im Folgenden beschriebenen Überstrukturen nach dem obigen Verfahren hergestellt sind.

Ein weiterer wesentlicher Aspekt der vorliegenden Erfindung ist eine Überstruktur miteinander verbundener Primärpartikel, wobei die Primärpartikel ausgewählt sind aus einer Gruppe, die mindestens ein 2-Schichtsilikat, mindestens ein 3-Schichtsilikate und mindestens ein 4-Schichtsilikat umfasst und wobei die Überstruktur zu mindestens 50 Gewichtsprozent eine Partikelgröße (Sedigraph) < 10 µm und zu mindestens 5 Gewichtsprozent eine Partikelgröße (Sedigraph) < 2 µm aufweist, wobei die Überstruktur aus Primärpartikeln gebildet ist, welche zu mindestens 50 Gewichtsprozent eine Partikelgröße (Sedigraph) < 10 µm und zu mindestens 20 Gewichtsprozent eine Partikelgröße (Sedigraph) < 2 µm aufweisen.

Vorzugsweise umfasst eine solche Überstruktur einen Zusatz, welcher ausgewählt ist aus einer Gruppe, die Silikate, Oxide, Carbonate, Sulfate, Phosphate, Calciumcarbonat, Quarz, Feldspat, Wollastonit, Apatit, Gips, Magnesit jeweils einzeln oder als Mischungen umfasst.

In einer bevorzugten Ausführungsform weist eine wie oben beschriebene Überstruktur miteinander verbundener Primärpartikel einen Weißgrad (R 457) > 70, bevorzugt > 75, weiter bevorzugt > 80 auf.

Bevorzugt zeichnet sich eine Überstruktur miteinander verbundener Primärpartikel weiterhin dadurch aus, dass sie bei Suspendierung in Wasser zu höchstens 5 Gewichtsprozent in die Primärpartikel zerfällt, bevorzugt zu höchstens 3 Gewichtsprozent in die Primärpartikel zerfällt, weiter bevorzugt nicht in die Primärpartikel zerfällt, und insbesondere bevorzugt die Primärpartikel irreversibel miteinander verbunden sind.

Ein weiterer wesentlicher Aspekt der Erfindung ist eine Verwendung einer wie oben beschriebenen Überstruktur miteinander verbundener Primärpartikel als funktioneller Füllstoff in einem Papier, einem Polymer oder einer Farbzusammensetzung. Eine solche Verwendung kann einem Papier, einem Polymer oder einer Farbzusammensetzung vorteilhafte Eigenschaften verleihen. Insbesondere kann der eine Verwendung einer oben beschriebenen Überstruktur miteinander verbundener Primärpartikel als funktioneller Füllstoff in den genannten Produktgruppen diesen Produkten eine hohe Deckkraft verleihen und gleichzeitig eine matte Oberfläche bieten. Anders als aus dem Stand der Technik bekannte Füllstoffe bieten die oben beschriebenen Überstrukturen vorzugsweise den Vorteil, dass sie auch bei hoher Deckkraft keinen hohen Glanz aufweisen.

Insbesondere ist dementsprechend eine Verwendung als Füllstoff einer Farbzusammensetzung und/oder einem Papier bevorzugt, dessen Deckkraft > 92 %, bevorzugt >95 % ist und ein Glanz gemessen mit einem Glanzmessgerät Micro-Tri-Gloss der Fa. Byk-Gardner bei 85° ≤ 25, bevorzugt ≤ 22, weiter bevorzugt≤ 20, besonders bevorzugt ≤ 18 ist, wie aus den nachfolgenden Beispielen und Methoden beschrieben bzw. zu ersehen ist.

Weitere Vorteile beispielhafter Verfahren und Überstrukturen sind anhand der folgenden Beispiele dargestellt. Einzelne Merkmale der beispielhaften Verfahren und Überstrukturen können jedoch auch unabhängig von anderen in dem jeweiligen Beispiel genannten Verfahrensschritten oder Eigenschaften durchgeführt beziehungsweise auftreten.

### Beispiel 1: Stand der Technik

Hochtemperaturkalzinierung eines Kaolinpulvers mit der von der Anmelderin genutzten Bezeichnung "H1" in einem Drehrohr bei etwa 1150°C in technischem Maßstab bei direkter Befeuerung. Die Korngrößenverteilung ist in Tabelle 2 dargestellt.

**Tabelle 2:**

| **Korngröße, µm*** | **Einheit** | **Aufgabekaolin** | **Strukturiertes Kaolin H1kalz1150** |
|---|---|---|---|
| >20 | Ma-% | 0,5 | 3 |
| 10-20 | Ma-% | 9,5 | 21 |
| 6-10 | Ma-% | 15 | 29 |
| 4-6 | Ma-% | 15 | 22 |
| 2-4 | Ma-% | 20 | 16 |
| 0-2 | Ma-% | 40 | 9 |

| | | | |
|---|---|---|---|
| * gemessen mittels Sedigraph in wässriger Suspension | | | |

Das dabei anfallende strukturierte Kaolin mit der Bezeichnung H1kalz1150 zeichnet sich durch einen niedrigeren Anteil von Korngrößen < 2 µm aus, was sich u.a. auf eine leicht höhere Deckkraft auswirkt sowie zu einem verbesserten rheologischen Verhalten bei Verwendung in Farben führt.

### Beispiel 2: Stand der Technik

Hochtemperaturkalzinierung eines Kaolinpulvers mit der von der Anmelderin genutzten Bezeichnung "DG Aufgabe" in einem Drehrohr bei etwa 1150°C in technischem Maßstab bei direkter Befeuerung. Die Korngrößenverteilung und die Abrasion sind in Tabelle 3 dargestellt.

**Tabelle 3:**

| **Korngröße, µm*** | **Einheit** | **DG Aufgabe** | **Strukturiertes Kaolin DGkalz1150°C** |
|---|---|---|---|
| 30-40 | | | 0,6 |
| 20-30 | Ma-% | <0,1 | 1,3 |
| 10-20 | Ma-% | <0,1 | 6,4 |
| 6-10 | Ma-% | <0,1 | 7,7 |
| 4-6 | Ma-% | 0,1 | 8,5 |
| 2-4 | Ma-% | 7,8 | 19,9 |
| 0-2 | Ma-% | 92,1 | 55,7 |
| Abrasion, Einlehner | mg | 3,4 | 60 |

| | | | |
|---|---|---|---|
| * gemessen mittels Sedigraph in wässriger Suspension | | | |

Das bei dieser Art der Kalzinierung anfallende strukturierte Kaolin mit der Bezeichnung DGkalz1150°C zeichnet sich durch einen reduzierten Anteil < 2 µm aus, allerdings ist der Anteil in den groben Fraktionen > 6 µm bzw. > 10 µm sowie die Abrasion unerwünscht hoch.

### Beispiel 3: Stand der Technik

Hochtemperaturkalzinierung des Kaolinpulvers mit der von der Anmelderin genutzten Bezeichnung "DG Aufgabe" in einem Drehrohr bei etwa 1150°C in technischem Maßstab bei direkter Befeuerung und nachträglicher Reduzierung des Grobanteils bei gleichzeitiger Zunahme im Feinanteil mit dem Ziel die Abrasion zu reduzieren. Die Korngrößenverteilung und die Abrasion sind in Tabelle 4 dargestellt.

**Tabelle 4:**

| **Korngröße, µm*** | **Einheit** | **DG Aufgabe** | **Strukturiertes Kaolin DGkalz1150°Cff** |
|---|---|---|---|
| 30-40 | | | <0,1 |
| 20-30 | Ma-% | <0,1 | <0,1 |
| 10-20 | Ma-% | <0,1 | 0,2 |
| 6-10 | Ma-% | <0,1 | 1,2 |
| 4-6 | Ma-% | 0,1 | 5,0 |
| 2-4 | Ma-% | 7,8 | 18,7 |
| 1-2 | Ma-% | 15,1 | 34,2 |
| 0-1 | Ma-% | 77,0 | 40,7 |
| 0-2 | Ma-% | 92,1 | 74,9 |
| Abrasion, Einlehner | mg | 3,4 | 44,7 |

| | | | |
|---|---|---|---|
| * gemessen mittels Sedigraph in wässriger Suspension | | | |

Das bei dieser Art der Kalzinierung anfallende feiner strukturierte Kaolin mit der Bezeichnung DGkalz1150°Cff hat einen höheren Anteil < 2 µm und einen reduzierten Anteil in den gröberen Fraktionen > 6 µm bzw. > 10 µm sowie eine reduzierte Abrasion. Allerdings ist diese Abrasion für verschiedene Anwendungen noch immer deutlich zu hoch. Wünschenswert wäre eine Abrasion <20 mg.

### Beispiel 4: Neuartige Verfahrensvariante und neues Produkt

Niedrigtemperaturkalzinierung des Kaolinpulvers mit der von der Anmelderin genutzten Bezeichnung "DG Aufgabe", welches nach den oben angegebenen Kriterien ausgewählt und vorbereitet worden ist, in einem Drehrohr bei verschiedenen Temperaturen über einen Zeitraum von 60 min. In Tabelle 5 sind die Ergebnisse der Messungen von Korngrößenverteilung und Abrasion nach Kalzinierung unter verschiedenen Bedingungen dargestellt.

**Tabelle 5:**

| | **DG Aufgabe** | **DGkalz 300°C** | **DGkalz 350°C** | **DGkalz 400°C** | **DGkalz 450°C** | **DGkalz 500°C** | **DGkalz 600°C** |
|---|---|---|---|---|---|---|---|
| [µm]* | MA.-% | MA.-% | MA.-% | MA.-% | MA.-% | MA.-% | MA.-% |
| >30 | 0 | 0 | 0 | 0 | 0 | 0 | 0 |
| 20-30 | 0,0 | 0,0 | 0,0 | 0,0 | 0,4 | 0,0 | 0,7 |
| 10-20 | 0,0 | 0,2 | 0,0 | 0,0 | 1,5 | 2,7 | 1,8 |
| 6-10 | 0,0 | 0,3 | 0,2 | 1,9 | 3,7 | 4,4 | 4,1 |
| 4-6 | 0,1 | 0,9 | 1,3 | 1,1 | 6,2 | 6,5 | 6,4 |
| 2-4 | 7,8 | 9,4 | 10,1 | 12,6 | 19,1 | 21,3 | 21,2 |
| 1-2 | 15,1 | 18,0 | 20,0 | 22,5 | 28,4 | 35,9 | 38,2 |
| 0,6-1 | 23,3 | 24,8 | 25,2 | 27,9 | 24,6 | 20,1 | 20,9 |
| 0,4-0,6 | 20,4 | 20,9 | 20,6 | 15,7 | 8,9 | 4,7 | 4,1 |
| 0-0,4 | 33,3 | 25,5 | 22,6 | 18,3 | 7,2 | 4,4 | 2,6 |
| 0-2 | 92,1 | 89,2 | 88,4 | 84,4 | 69,1 | 65,1 | 65,8 |
| Abrasion mg | 3,4 | 3,5 | 2,9 | 3,2 | 2,3 | 6,0 | 10,0 |

| | | | | | | | |
|---|---|---|---|---|---|---|---|
| * gemessen mittels Sedigraph in wässriger Suspension | | | | | | | |

Der Feinanteil nimmt mit steigender Temperatur deutlich ab, d.h. die Bildung von Überstrukturen findet statt und eine Strukturierung im Sinne der oben genannten Definition nimmt zu. Parallel dazu bleibt die Abrasion auf einem sehr niedrigen Niveau.

Ausgewählte Muster wurden in Wasser suspendiert und nach Ultraschallbehandlung auf einen Träger gebracht und danach REM-Aufnahmen erstellt. Auch durch diese Probenvorbereitung wird sichergestellt, dass lockere Agglomerate, also Kaolin, welches keine Überstruktur im Sinne dieser Beschreibung beziehungsweise nicht strukturiert im Sinne dieser Beschreibung ist, nicht erfasst werden.

Die Ergebnisse dieser Untersuchungen sind in den Figuren dargestellt. Dabei zeigen:
- Fig 1a:: das Rohmaterial mit der von der Anmelderin genutzten Bezeichnung "DG Aufgabe" in 1000-facher Vergrößerung,
- Fig 1b:: das Rohmaterial mit der von der Anmelderin genutzten Bezeichnung "DG Aufgabe" in 3000-facher Vergrößerung,
- Fig 2a:: das daraus bei einer Behandlung bei 450°C erhaltene Produkt mit der von der Anmelderin genutzten Bezeichnung "DGkalz450°C" in 1000-facher Vergrößerung,
- Fig 2b:: das daraus bei einer Behandlung bei 450°C erhaltene Produkt mit der von der Anmelderin genutzten Bezeichnung "DGkalz450°C" in 3000-facher Vergrößerung,
- Fig. 3: eine graphische Darstellung der Deckkraft verschiedener Überstrukturen in einer Farbzusammensetzung.

### Ergebnis

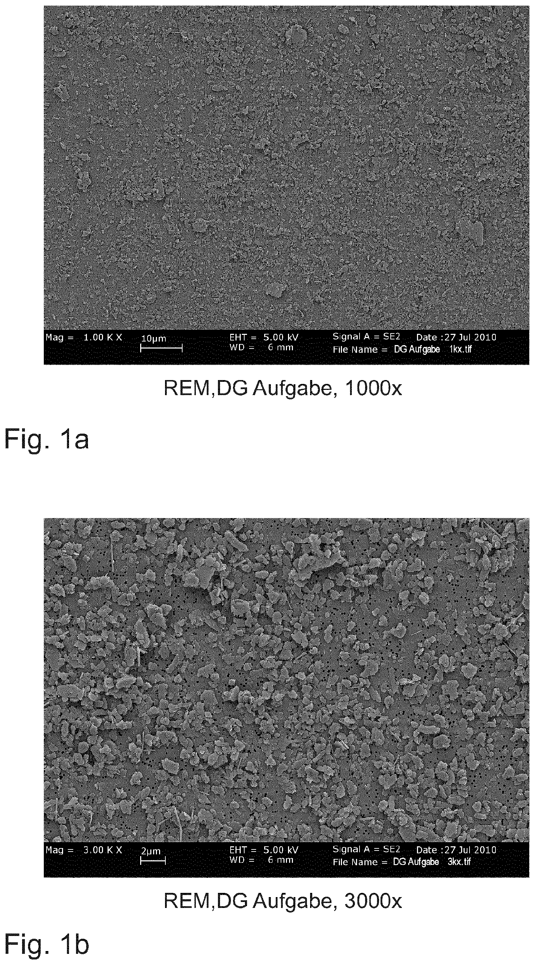

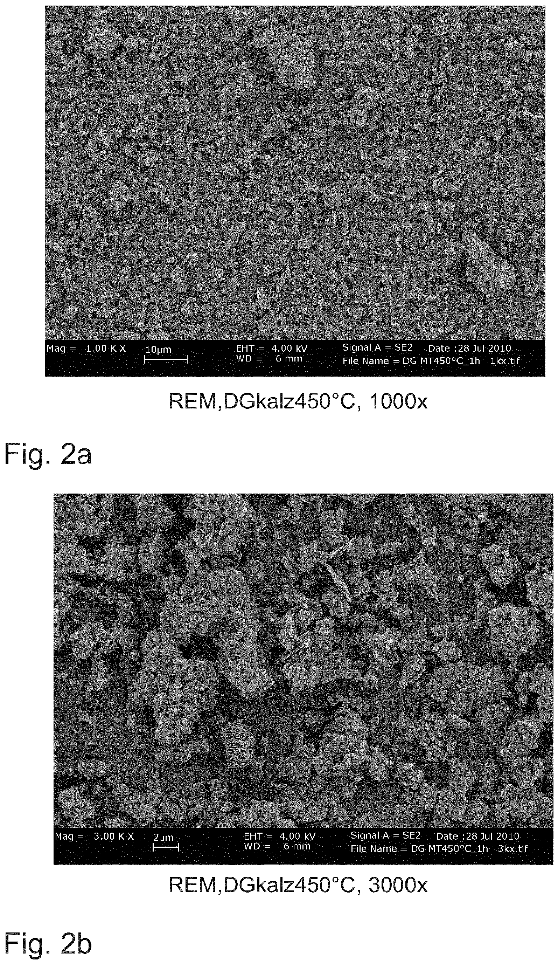

Das Aufgabematerial "DG Aufgabe" (Fig. 1a und 1b) ist durch eine Vielzahl vereinzelt vorliegender Partikel gekennzeichnet, während das Produkt nach der thermischen Behandlung und Umsetzung zu Überstrukturen (hier DGkalz450°C, Fig. 2a und 2b) deutlich die irreversible Zusammenlagerung von Einzelpartikeln zu Agglomeraten zeigt. Dabei zeigt Fig. 1a das Kaolin mit der von der Anmelderin genutzten Bezeichnung "DG Aufgabe" in 1000-facher Vergrößerung und Fig. 1b dieses Kaolin in 3000-facher Vergrößerung. Das kalzinierte Kaolin mit der von der Anmelderin genutzten Bezeichnung "DGkalz450°C" ist in 1000-facher Vergrößerung in Fig. 2a gezeigt und in 3000facher Vergrößerung in Fig. 2b.

Eine Charakterisierung einer Auswahl bei einer solchen Umsetzung verschiedener Ausgangsmaterialien zu Überstrukturen erhaltener Produkte ist in Tabelle 6 dargestellt.

**Tabelle 6:**

| **Parameter** | **Einheit** | Verwendetes Aufgabematerial: **Kaolin** | Verwendetes Aufgabematerial: **Halloysit** | Verwendetes Augabematerial: **Nakrit** | Verwendetes Aufgabematerial: **Dickit** |
|---|---|---|---|---|---|
| Korngröße 1, < 10 µm | Ma-% | >50 | >50 | >50 | >50 |
| Korngröße 1, < 10 µm, bevorzugt | Ma-% | >60 | >60 | >60 | >60 |
| Korngröße 1, < 10 µm, meist bevorzugt | Ma-% | >80 | >80 | >80 | >80 |
| Korngröße 1, < 2 µm | Ma-% | >5 | >5 | >5 | >5 |
| Korngröße 1, < 2 µm, bevorzugt | Ma-% | >10 | >10 | >10 | >10 |
| Korngröße 1, < 2 µm, meist bevorzugt | Ma-% | >15 | >15 | >15 | >15 |
| Korngröße 2, < 10 µm | Ma-% | >50 | >50 | >50 | >50 |
| Korngröße 2, < 10 µm bevorzugt | Ma-% | >60 | >60 | >60 | >60 |
| Korngröße 2, < 10 µm meist bevorzugt | Ma-% | >80 | >80 | >80 | >80 |
| Korngröße 2, < 2 µm | Ma-% | >5 | >5 | >5 | >5 |
| Korngröße 2, < 2 µm, bevorzugt | Ma-% | >10 | >10 | >10 | >10 |
| Korngröße 2, < 2 µm, meist bevorzugt | Ma-% | >15 | >15 | >15 | >15 |
| Aspektverhältnis meist bevorzugt | | >1 | >1 | >1 | >1 |
| Weißgrad, R 457 | % | >70 | >70 | >70 | >70 |
| Weißgrad, R 457 meist bevorzugt | % | >75 | >75 | >75 | >75 |
| Chem. Inhalt (außer Al, Si, H, O) | Ma-% | <60 | <60 | <60 | <60 |
| Chem. Inhalt (außer Al, Si, H, O), bevorzugt | Ma-% | <10 | <10 | <10 | <10 |
| Abrasion, Einlehner | mg | <50 | <50 | <50 | <50 |
| Abrasion, Einlehner, bevorzugt | mg | <30 | <30 | <30 | <30 |

| | | | | | |
|---|---|---|---|---|---|
| Korngröße 1 = gemessen mittels Sedimentationsmethode, z.B. Sedigraph Korngröße 2 = gemessen mittels Laserbeugung, z.B. mittels Cilas | | | | | |

### Beispiel 5: Vergleich der Deckkraft

Ein nach der in Beispiel 4 beschriebenen Verfahrensvariante hergestelltes Produkt wurden im Vergleich zu strukturierten Produkten, hergestellt nach dem konventionell Verfahren (Hochtemperaturkalzierung, Beispiele 2 und 3) hinsichtlich des Deckvermögens und der Glanzentwicklung in Farbanwendungen untersucht. Alle Materialien aus den Beispielen 2, 3 und 4 basieren auf dem gleichen Aufgabematerial und können dadurch direkt miteinander verglichen werden.

Dazu wurden die Materialien in einer Bindemittelmischung dispergiert. Deren Rezeptur, bezogen auf Handelsware ist in Tabelle 7 dargestellt.

**Tabelle 7:**

| | |
|---|---|
| Wasser | 567,7 g |
| Tylose MH 6000 YG8 | 9,7 g |
| Lopon LF | 4,9 g |
| Agitan 381 | 3,2 g |
| Mowilith LDM 1871 | 81,1 g |
| Acticide MBS | 2 g |

Dazu werden jeweils 66,7 g dieser Bindemittelmischung mit 33,3 g zu prüfender Probe mit einem Speedmixer 4 min bei 3000 U/min eingearbeitet. Die Mischung wird danach in Schichtstärken von 150 µm und 300 µm auf schwarz-weiß-Karten aufgebracht und nach dem Trocknen die relative Deckkraft bestimmt. Dazu wird der Quotient aus dem Weißgrad über schwarzem Hintergrund und der Weißgrad über weißem Hintergrund gebildet. Ein hoher Zahlenwert ist dabei gleichbedeutend mit einer hohen Deckkraft.

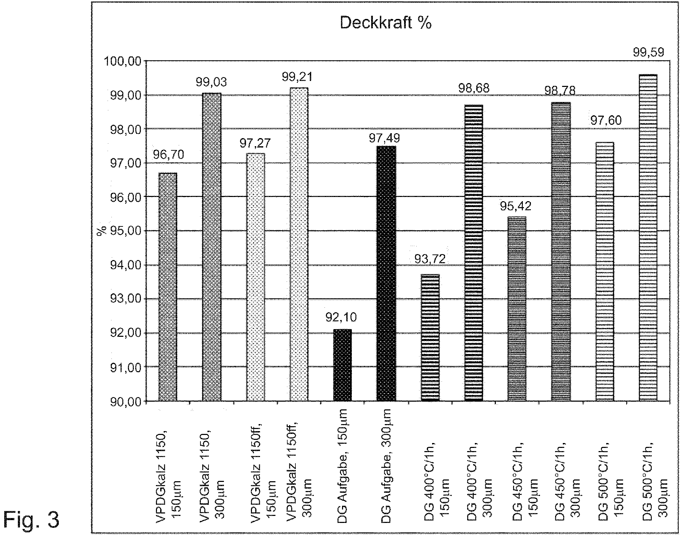

Zusätzlich wird von den Strichmustern auch der Glanz bestimmt. Dies geschieht hier mit dem Glanzmessgerät Micro-Tri-Gloss der Fa. Byk-Gardner bei 85°. Es wird jeweils eine Mehrfachmessung durchgeführt und daraus der Durchschnitt gebildet. Ein hoher Zahlenwert ist dabei gleichbedeutend mit einem hohen Glanz. Eine vergleichende Übersicht der Deckkraft ist tabellarische in Tabelle 8 dargestellt. Außerdem zeigt Fig. 3 eine graphische Darstellung der Deckkraft verschiedener Kaoline.

**Tabelle 8:**

| | | **Deckkraft %** | **Glanz, 85°** |
|---|---|---|---|
| DGkalz1150°C, 150 µm | Aus Beispiel 2 | 96,70 | 13,6 |
| DGkalz1150°C, 300 µm | Aus Beispiel 2 | 99,03 | 12,0 |
| DGkalz1150°Cff, 150 µm | Aus Beispiel 3 | 97,27 | 17,5 |
| DGkalz1150°Cff, 300 µm | Aus Beispiel 3 | 99,21 | 16,9 |
| DG Aufgabe, 150 µm | Aus Beispiel 4 | 92,10 | 46,3 |
| DG Aufgabe, 300 µm | Aus Beispiel 4 | 97,49 | 42,0 |
| DGkalz400°C/1h, 150 µm | Aus Beispiel 4 | 93,72 | 20,1 |
| DGkalz 400°C/1h, 300 µm | Aus Beispiel 4 | 98,68 | 20,5 |
| DGkalz 450°C/1h, 150 µm | Aus Beispiel 4 | 95,42 | 11,9 |
| DGkalz 450°C/1h, 300 µm | Aus Beispiel 4 | 98,78 | 12,3 |
| DGkalz 500°C/1h, 150 µm | Aus Beispiel 4 | 97,60 | 6,4 |
| DGkalz 500°C/1h, 300 µm | Aus Beispiel 4 | 99,59 | 6,4 |

Aus den Messwerten in Tabelle 8 und der graphischen Darstellung in Fig. 3 geht eindeutig hervor, dass die nach dem oben beschriebenen Verfahren hergestellten Überstrukturen, deutliche Vorteile in der Deckkraft gegenüber dem eingesetzten Rohstoff haben. Im Vergleich zu den strukturierten Kaolinen aus dem bereits bekannten Hochtemperaturprozess nach dem Stand der Technik sind die Überstrukturen annähernd gleichwertig oder zeigen sogar noch bessere Resultate in der Deckkraft.

Weiterhin geht aus den Ergebnissen hervor, dass mit zunehmender Deckkraft der Glanz abnimmt. Dies ist ein überraschender Effekt, da bei thermisch strukturierten Kaolinen üblicherweise eine zunehmende Deckkraft immer auf einem zunehmenden Feinstanteil beruht und dies wiederum einhergeht mit hohen Glanzwerten, wie folgende Tabelle zeigt. Darin gezeigt sind die Feinheit (Sedigraph), die Deckkraft und der Glanz eines sehr feinteiligen marktgängigen, nach dem Stand der Technik thermisch behandelten Kaolins, wobei Deckkraft und Glanz nach den in Beispiel 5 beschriebenen Methoden gemessen wurden. Die Messergebnisse in Bezug auf Feinheit (Sedigraph), Deckkraft und Glanz von kommerziellem kalziniertem Kaolin nach dem Stand der Technik sind in Tabelle 9 dargestellt.

**Tabelle 9:**

| | Anteil <2µm* | Anteil <1µm* | Deckkraft | Glanz, 85° |
|---|---|---|---|---|
| | Ma-% | Ma-% | % | |
| Satintone 5 HB, 150 µm | 88 | 73 | 98,23 | 31,6 |
| Satintone 5 HB, 300 µm | 88 | 73 | 99,72 | 31,2 |

| | | | | |
|---|---|---|---|---|
| * gemessen mittels Sedigraph in wässriger Suspension | | | | |

Abweichend vom Stand der Technik ist bei den Überstrukturen dieser Zusammenhang zwischen hoher Deckkraft und hohem Glanz nicht gegeben sondern sogar umgekehrt ein niedriger Glanz bei hoher Deckkraft gegeben, was eine zusätzliche neuartige, vorteilhafte Funktionalität bedeutet.

### Beispiel 6: Vergleich von Überstrukturen und strukturierten Kaolinen, welche nach dem Stand der Technik hergestellt wurden, in einer Farbrezeptur

Die Überstrukturen mit der von der Anmelderin genutzten Bezeichnungen "DGkalz600°C", nach dem neuartigen Verfahren hergestellte Überstrukturen aus Beispiel 4 wurden im Vergleich zu strukturierten Produkten, hergestellt nach dem konventionellen Verfahren (Hochtemperaturkalzinierung, Beispiele 2 und 3) sowie im Vergleich zu einem marktgängigen strukturierten Kaolin, welcher ebenfalls nach dem Stand der Technik hergestellt worden ist und hier als externe Vergleichsprobe dient, in einer vollständigen Farbrezeptur untersucht.

Es wurden mehrere Parameter geprüft. Alle Materialien aus den Beispielen 2, 3 und 4 basieren auf dem gleichen Aufgabematerial und können dadurch direkt miteinander verglichen werden. Als externes Vergleichsmaterial wurde Satintone 5HB eigesetzt. Dieses Material wird nach dem Stand der Technik hergestellt, wobei die thermische Strukturierung im Wesentlichen aus folgenden Prozessschritten besteht:
Auswahl eines sehr feinteiligen Aufgabekaolins (>90 Ma-% < 2µm und > 80 Ma-% < 1 µm, Sedigraph),
Pulverisieren und Vereinzeln der Kaolinpartikel,
thermische Strukturierung bei 900-1150° im Drehrohr- oder Etagenofen, und
Pulverisieren, vereinzeln und gegebenenfalls abtrennen grobteiliger strukturierter Partikel.

Das resultierende Produkt hat die Tabelle 9 beschriebene Korngrößenverteilung.

Die daraus hergestellten Farbrezepturen sind in nachfolgender Tabelle 10 beschrieben.

**Tabelle 10: Rezepturen**

| | Dichte | Gehalt | **TVM_8** | **TVM_8** | **TVM_13** | **TVM_24** |
|---|---|---|---|---|---|---|
| Wasser | | 100% | 423,0 | 423,0 | 423,0 | 423,0 |
| Dispelair CF 525 | | 50% | 3,0 | 3,0 | 3,0 | 3,0 |
| Orotan N 4045 | 1,3 | 45% | 2,5 | 2,5 | 2,5 | 2,5 |
| Acticide MBS | | | 2,0 | 2,0 | 2,0 | 2,0 |
| Natrosol 250KR | | 100% | 9,0 | 9,0 | 9,0 | 9,0 |
| Ammoniak-Lsg. 10% | | | 1,5 | 1,5 | 1,5 | 1,5 |
| Ropaque Ultra E | 0,59 | 30% | 100,0 | 100,0 | 100,0 | 100,0 |
| Steamatt Talc | 2,78 | 100% | 120,0 | 120,0 | 120,0 | 120,0 |
| CaCO3 5 µm | 2,7 | 100% | 55,0 | 55,0 | 55,0 | 55,0 |
| Satintone 5HB | 2,63 | 100% | **85,0** | 0,0 | 0,0 | 0,0 |
| DGkalz1150°C | 2,6 | 100% | 0,0 | 0,0 | 0,0 | **85,0** |
| DGkalz600°C | 2,6 | 100% | 0,0 | **85,0** | 0,0 | 0,0 |
| DGkalz1150°Cff | 2,6 | 100% | 0,0 | 0,0 | **85,0** | 0,0 |
| TR 92 | 4,1 | 100% | 100,0 | 100,0 | 100,0 | 100,0 |
| Dispelair CF 525 | | 50% | 2,0 | 2,0 | 2,0 | 2,0 |
| Texanol | | | 11,2 | 11,2 | 11,2 | 11,2 |
| Synthomer DP5232 | 1,08 | 58% | 78,5 | 78,5 | 78,5 | 65,0 |
| Acrysol tt935er | 1,06 | 30% | 7,3 | 7,3 | 7,3 | 7,3 |
| **Summe** | | | **1000,0** | **1000,0** | **1000,0** | **986,5** |

Die Ergebnisse der Farbprüfungen sind in nachfolgender Tabelle 11 beschrieben

**Tabelle 11: Ergebnisse**

| | **TVM_8** | **TVM_8** | **TVM_13** | **TVM_24** |
|---|---|---|---|---|
| | Satintone5HB | DGkalz600°C | DGkalz1150°Cff | DGkalz1150°C |
| Dichte [g/cm³] | 1,303 | 1,320 | 1,314 | 1,325 |

| **Viskositäten** | | | | |
|---|---|---|---|---|
| Schubspannung, 1200 s⁻¹ [Pa] | | | | |
| nach Fertigung | 591 | 627 | 591 | 603 |
| nach 24 h | 695 | 565 | 580 | 655 |
| **nach 7 Tagen** bei 50°C | 501 | 493 | 522 | 511 |
| Brookfield, 10 rpm sofort | 11900 | 23700 | 7700 | 6500 |
| Brookfield, 10 rpm nach 24 h | 28200 | 30400 | 22100 | 22600 |

| **Aufzüge, auf Kontrastkarte** | | | | |
|---|---|---|---|---|
| L-Wert | 97,06 | 96,41 | 96,84 | 96,89 |
| a-Wert | -0,41 | -0,33 | -0,39 | -0,41 |
| b-Wert | 1,29 | 1,90 | 1,33 | 1,13 |
| Gelbwert | 2,13 | 3,35 | 2,21 | 1,83 |
| Normfarbwert Y | 92,59 | 91,01 | 92,06 | 92,18 |
| Deckvermögen 150 µm nass | 98,62 | 98,42 | 98,26 | 98,47 |
| Schichtdicke in µm | 68 | 72 | 70 | 66 |
| Glanz 60° / 85° | 2,7/4,0 | 2,5/2,3 | 2,5/2,5 | 2,4/1,8 |

| **EN 13300** | | | | |
|---|---|---|---|---|
| Ergiebigkeit m²/l | 8 | 8 | 8 | 8 |
| Ergiebigkeit Klasse | | 2 | 2 | 2 |
| Nassabriebbeständigkeit | 31 | 29 | 28 | 27 |

Wie der Tabelle 11 zu entnehmen ist, sind die Viskositäten insgesamt betrachtet bei der Rezeptur, die die mit "DGkalz600°C" bezeichneten Überstrukturen enthält, am höchsten, gefolgt von der Rezeptur, die Satintone 5 HB enthält. Danach folgen etwa gleichauf die Rezepturen, die die Produkte "DGkalz1150°C" und "DGkalz1150°Cff" enthalten.

Der L-Wert ist mit 97,06 bei der Satintone enthaltenden Rezeptur am höchsten, gefolgt von den Rezepturen, die Überstrukturen der Bezeichnung "DGkalz1150°C" enthalten, mit 96,89 und "DGkalz1150°Cff" mit 96,84 und danach schließlich die Rezeptur, die Überstrukturen der Bezeichnung "DGkalz600°C" enthält, mit 96,41. Die dazugehörigen Schichtdicken sind auf gleichem Niveau, sodass auch die Deckfähigkeit und die optischen Werte verglichen werden können.

Der Glanz ist bei der Rezeptur, die Überstrukturen der Bezeichnung "DGkalz600°C" aufweist, auf gleichem Niveau wie bei derjenigen, die das Produkt "DGkalz1150°Cff" enthält. Damit sind beide weniger glänzend als die Rezeptur mit Satintone 5HB. Geringfügig niedriger ist danach die Rezeptur mit DGkalz1150°C. Ergiebigkeit und Nassabriebbeständigkeit zeigen bei allen Mustern vergleichbare Ergebnisse.

Überraschender Weise ist der L-Wertunterschied bei der Rezeptur mit DGkalz600°C (96,4) deutlich weniger stark ausgeprägt, als dies auf Basis der Füllstoffprüfung erwartet worden war. Danach folgen die Rezepturen mit DGkalz1150ff (96,8) und DGkalz1150 (96,9) und schließlich Satintone 5 HB mit 97,1.

Beim Deckvermögen (150 µm, nass) ist die Rezeptur mit DGkalz600°C mit 98,4 gleichauf mit der Rezeptur mit DGkalz1150 (98,5) und beide knapp hinter der Rezeptur mit Satintone 5HB mit 98,6, während die Rezeptur mit DGkalz1150°Cff mit 98,3 das niedrigste Deckvermögen zeigt.

Der Glanz der Rezeptur mit DGkalz600°C ist gleichauf mit dem der Rezeptur mit DGkalz1150ff und für beide vorteilhaft niedriger als derjenige der Rezeptur mit Satintone 5HB. Geringfügig niedrigere Glanzwerte zeigt die Rezeptur mit DGkalz1150°C.

Wie durch die oben beschriebenen Beispiele und Vergleichsergebnisse belegt ist, bieten Varianten der erfindungsgemäßen Überstrukturen und das Verfahren zu deren Herstellung diverse Vorteile. Diese sind beispielsweise aus einer Gruppe, die
- hohe Feinheit (höher als DGkalz1150°C und etwa gleich hoch wie DGkalz1150°Cff)
- gleich hohes bzw. höheres Deckvermögen als strukturierte Kaoline, hergestellt nach dem Stand der Technik
- im Vergleich zu DGkalz1150°Cff deutlich niedrigere Herstellkosten und CO₂-Emissionen, da die Kalzinierung bei 600°C stattfindet und keine vorhergehende Desagglomeration bzw. keine nachträgliche Feinstsichtung nötig ist.
- im Vergleich zu DGkalz1150°C deutlich niedrigere Herstellkosten und CO₂-Emissionen, da die Kalzinierung bei 600°C stattfindet,
umfasst.

Vergleichbare oder bessere Eigenschaften bieten Varianten der erfindungsgemäßen Überstrukturen und das Verfahren zu deren Herstellung außerdem in einer Gruppe von Eigenschaften, die:
- Rheologieverbesserung bei Verwendung als Füllstoff in Farben,
- verbesserte Matt-/Glanzeffekte bei Verwendung als Füllstoff in Farben,
- Volumensteigerung bei Verwendung als Füllstoff in Papier,
- verbesserte Opazität bei Verwendung als Füllstoff in Papier,
- bessere mechanische Eigenschaften bei Verwendung als Füllstoff in Polymeren, mit oder ohne vorhergehende Oberflächenbeschichtung, z.B. Silanisierung,
- verringerte Ölaufnahme bei Verwendung in z.B. Farbe, Papier, Polymer,
- verringerter Verschleiß z.B. an Sieben bzw. Streichwerkzeugen bei Verwendung als Füllstoff bzw. Streichpigment in der Papierindustrie wegen reduzierter Abrasion und
- verringerter Verschleiß z.B. an Extrudern bzw. Werkzeugen bei Verwendung als Füllstoff in z.B. Thermoplasten in der Polymerindustrie wegen reduzierter Abrasion
umfasst.

Neue Eigenschaften bieten Varianten der erfindungsgemäßen Überstrukturen und das Verfahren zu deren Herstellung beispielsweise
- bei deren Verwendung als Trägermaterial für Katalysatoren und/oder
- als reaktiver Reaktionspartner in der Reaktion mit Alkalisilikaten, Säuren, Laugen sowie Verbindungen mit der zweiten Hauptgruppe des Periodensystems.

Neben diesen und anderen technischen Vorteilen führt das neuartige Verfahren zusätzlich zu deutlichen ökonomischen und ökologischen Vorteilen, was schließlich auch enorm vorteilhaft für die ökonomische und ökologische Bewertung der Überstrukturen sowie der die Überstrukturen enthaltenden Endprodukte, wie z.B. Papier, Farbe oder Polymere ist.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zur Herstellung von Überstrukturen miteinander verbundener Primärpartikel, wobei die Primärpartikel ausgewählt sind aus einer Gruppe, die 2-Schichtsilikate, 3-Schichtsilikate und 4-Schichtsilikate umfasst und wobei die Überstrukturen zu mindestens 50 Gewichtsprozent eine Partikelgröße (Sedigraph) < 10 µm und zu mindestens 5 Gewichtsprozent eine Partikelgröße (Sedigraph) < 2 µm aufweisen, **gekennzeichnet durch** die Schritte:
Bereitstellen der Primärpartikel, welche zu mindestens 50 Gewichtsprozent eine Partikelgröße (Sedigraph) < 10 µm und zu mindestens 20 Gewichtsprozent eine Partikelgröße (Sedigraph) < 2 µm aufweisen,
thermische Behandlung der Primärpartikel in einem Temperaturbereich von 200°C bis 900°C.

2. Verfahren nach Anspruch 1,
**dadurch gekennzeichnet, dass**
die thermische Behandlung der Primärpartikel in einem Temperaturbereich von 850°C oder weniger, bevorzugt 785°C oder weniger erfolgt.

3. Verfahren nach wenigstens einem der vorangegangenen Ansprüche,
**dadurch gekennzeichnet, dass**
die Primärpartikel ausgewählt sind aus einer Gruppe, die Kaolin, Montmorillonit, Talkum, Glimmer, Sepiolith, Nakrit, Halloysit, Dickit, Mischungen dieser untereinander und Mischungen dieser mit anderen Substanzen umfasst.

4. Verfahren nach wenigstens einem der vorangegangenen Ansprüche,
**dadurch gekennzeichnet, dass**
dem Bereitstellen der Primärpartikel mindestens ein weiterer Verfahrensschritt vorausgeht, welcher aus einer Gruppe ausgewählt ist, der Abbau der Roherde, Suspendierung von Roherde in Wasser, Abtrennung grober Anteile, Trennung der Feinstoffe gegebenenfalls in verschiedene Fraktionen, Nassmahlung, Trockenmahlung, chemische und/der physikalische Weißgradverbesserung, oxidierende und/oder reduzierende Bleiche, Magnetscheidung, Reinigung, selektive Flockung, Fraktionierung, Flockung, Eindickung, Delaminierung, Mahlung, Mischung mit anderen Komponenten, Zusatz mindestens eines Additivs, Zusatz mindestens eines organischen Aufhellers, Zusatz mindestens eines anorganischen Aufhellers, Zusatz mindestens eines anderen Kaolins, Zusatz mindestens eines Füllstoffen, Entwässerung, Dispergierung, Granulierung, Mahltrocknung und/oder Sprühtrocknung umfasst.

5. Verfahren nach wenigstens einem der vorangegangenen Ansprüche,
**dadurch gekennzeichnet, dass**
vor, während und/oder nach der thermischen Behandlung der Primärpartikel mindestens ein Zusatz zugegeben wird, welcher ausgewählt ist aus einer Gruppe, die Silikate, Oxide, Carbonate, Sulfate, Phosphate, Calciumcarbonat, Quarz, Feldspat, Wollastonit, Apatit, Gips, Magnesit jeweils einzeln oder als Mischungen umfasst.

6. Verfahren nach wenigstens einem der vorangegangenen Ansprüche,
**dadurch gekennzeichnet, dass**
die thermische Behandlung der Primärpartikel in einem Ofen stattfindet, welcher ausgewählt ist aus einer Gruppe, die einen Drehrohrofen, einen Etagenofen, einem Wirbelschichtofen, einem Mahltrockenofen und einen Sprühtrockenofen umfasst.

7. Überstruktur miteinander verbundener Primärpartikel, wobei die Primärpartikel ausgewählt sind aus einer Gruppe, die mindestens ein 2-Schichtsilikat, mindestens ein 3-Schichtsilikate und mindestens ein 4-Schichtsilikat umfasst und wobei die Überstruktur zu mindestens 50 Gewichtsprozent eine Partikelgröße (Sedigraph) < 10 µm und zu mindestens 5 Gewichtsprozent eine Partikelgröße (Sedigraph) < 2 µm aufweist, **dadurch gekennzeichnet, dass**
die Überstruktur aus Primärpartikeln gebildet ist, welche zu mindestens 50 Gewichtsprozent eine Partikelgröße (Sedigraph) < 10 µm und zu mindestens 20 Gewichtsprozent eine Partikelgröße (Sedigraph) < 2 µm aufweisen.

8. Überstruktur miteinander verbundener Primärpartikel nach Anspruch 7,
**dadurch gekennzeichnet, dass**
sie einen Weißgrad (R 457) > 70, bevorzugt > 75, weiter bevorzugt > 80 aufweist.

9. Überstruktur miteinander verbundener Primärpartikel nach wenigstens einem der Ansprüche 7 - 8,
**dadurch gekennzeichnet, dass**
Überstruktur bei Suspendierung in Wasser zu höchstens 5 Gewichtsprozent in die Primärpartikel zerfällt, bevorzugt zu höchstens 3 Gewichtsprozent in die Primärpartikel zerfällt, weiter bevorzugt nicht in die Primärpartikel zerfällt, und insbesondere bevorzugt die Primärpartikel irreversibel miteinander verbunden sind.

10. Verwendung einer Überstruktur miteinander verbundener Primärpartikel nach wenigstens einem der Ansprüche 7 - 9 als funktioneller Füllstoff in einem Papier, einem Polymer oder einer Farbzusammensetzung.

11. Verwendung nach Anspruch 10,
**dadurch gekennzeichnet, dass**
bei der Verwendung als Füllstoff einer Farbzusammensetzung eine Deckkraft > 92 %, bevorzugt >95 % ist und ein Glanz gemessen mit einem Glanzmessgerät Micro-Tri-Gloss der Fa. Byk-Gardner bei 85° ≤ 25, bevorzugt ≤ 22, weiter bevorzugt≤ 20, besonders bevorzugt ≤ 18 ist.
